# DEMANDE DE BREVET EUROPEEN

(11) **EP 0 905 050 A1**
(43) Date de publication de la demande: **31.03.1999**
(21) Numéro de dépôt: 97116438.9
(22) Date de dépôt: 20.09.1997
(51) Int. Cl.: B65D 81/36, B65D 81/05, B60R 22/00

(54) **Coussin de protection pour ceinture de sécurité et emballage recyclable pour marchandises**

(71) Demandeur: Mathlouthi, Abdelkader, 2103 Noiraigue (CH)
(72) Inventeur: Mathlouthi, Abdelkader, 2103 Noiraigue (CH)
(74) Mandataire: Coutts, William Robert

(57) **Abrégé**

Un emballage (1) comporte un emplacement (2) servant, après déballage, à disposer une ceinture de sécurité entre un rembourrage (3) et une face médiane (4). Améliore le confort. Peut contenir des données concernant l'occupant du véhicule. Fixation réversible par bandes velcro.

## Description

L'invention concerne un emballage selon préambule de la revendication 1. Le dispositif de rembourrage sert, de façon connue, à éviter des dommages à l'objet emballé en cas de choc à l'emballage. Cet objet emballé a de préférence une valeur justifiant un emballage élaboré, valeur indépendante de la taille de l'objet.

Les emballages d'objets précieux posent un problème d'élimination : le destinataire de l'objet hésite à les jeter car ils sont d'autant plus soignés et volumineux que l'objet emballé est précieux. Il n'est pas toujours aisé de trouver à un tel emballage une fonction ultérieure, qui évite à la fois de les jeter et d'encombrer caves et greniers.

L'invention se propose de remédier à ce problème par les moyens décrits dans la partie caractérisante de la revendication 1.

L'emballage, de forme générale plate et allongée, présente une longueur en général plus de deux a trois fois supérieure à sa largeur.

Cette largeur est choisie, selon l'invention, comme supérieure à la largeur habituelle d'une ceinture de sécurité de véhicule.

L'ouverture de l'emballage selon l'invention se fait par rotation d'une ou plusieurs faces autour d'un axe parallèle à sa plus grande dimension. Une fois l'objet extrait, il est facile de disposer l'emballage sur la ceinture de sécurité du véhicule et de le refermer selon le même principe que celui de son ouverture.

L'emballage selon l'invention est conçu de façon à ne pas glisser trop facilement le long de la ceinture, tout en permettant au porteur de la ceinture de régler l'emplacement de façon optimale pour un confort accru, par exemple en plaçant le dispositif de rembourrage de l'emballage sur la clavicule.

Dans une forme particulière de réalisation de l'invention, le complément à la ceinture constitué par l'emballage recyclé a une double fonction : en marche normale du véhicule, il assure un plus grand confort au porteur de la ceinture, grâce au dispositif de rembourrage. Par ailleurs, en cas d'accident grave entraînant une perte de connaissance du porteur de ceinture, il permet aux sauveteurs d'acquérir des données critiques pour l'organisation des secours : identification certaine du porteur de la ceinture grâce à une photographie et des données staturo-pondérales, contre-indications médicales éventuelles, coordonnées des personnes à prévenir, groupe sanguin, indication de limitation volontaire des transfusions aux auto-transfusions, pochette sanguine à cet effet, etc. La pochette contenant une telle réserve de sang pour auto-transfusion peut être installée dans un supplément séparé, d'aspect similaire au complément de ceinture, et portant une indication très lisible destinée aux sauveteurs.

Dans une forme particulière de l'invention, l'emballage se fixe à la ceinture à l'aide de bandes à arrachage réversible. Ces bandes peuvent être les mêmes ou partiellement les mêmes que celles fermant l'emballage.

En particulier, les orifices de passage de la ceinture peuvent être munies de bandes adaptées à la fonction précitée de réglage facile de la position du complément sur la ceinture. Dans une forme particulière de réalisation de l'invention, l'emballage comprend, sur une ou plusieurs de ses parties, des inscriptions publicitaires.

L'invention concerne aussi un dispositif de capitonnage ou coussin de protection pour ceinture de sécurité de véhicule, susceptible d'être transformé aisément en emballage d'une marchandise après dépose.

D'autres avantages de l'invention apparaîtront à la lumière de la description détaillée qui va suivre, en référence au dessin annexé dans lequel :
- la figure 1 représente l'emballage fermé, vu de profil:
- la figure 2 représente l'emballage partiellement ouvert, également de profil;
- la figure 3 montre l'emballage complètement ouvert, vu de face.

L'emballage 1 d'une marchandise pouvant être disposée dans l'emplacement 2 comporte un dispositif de rembourrage 3 protégeant cette marchandises contre les chocs. Ce dispositif de rembourrage 3 peut aussi avoir une rigidité protégeant la marchandise contre un pliage non désiré.

La marchandise , ou la ceinture de sécurité, sont serrées entre le dispositif de rembourrage 3 et une face médiane 4. Cette face médiane 4 peut elle aussi être munie d'un capitonnage ou avoir des caractéristiques de rigidité plane.

Une face de recouvrement 5 complète l'emballage et vient s'accrocher au dos du dispositif de rembourrage 3 par des bandes à arrachage réversible. La face médiane 4 peut également adhérer au dispositif de rembourrage 3 par de telles bandes.

Une ligne de pliage 6 autorise le pivotement de la face de recouvrement 5 par rapport à la face médiane 4, lors du déballage de la marchandise. L'articulation entre le dispositif de rembourrage 3 et la face médiane 4 permet d'extraire la marchandise de l'emplacement 2, et ultérieurement de placer la ceinture de sécurité entre le dispositif de rembourrage 3 (placé contre le corps du passager) et la face médiane 4.

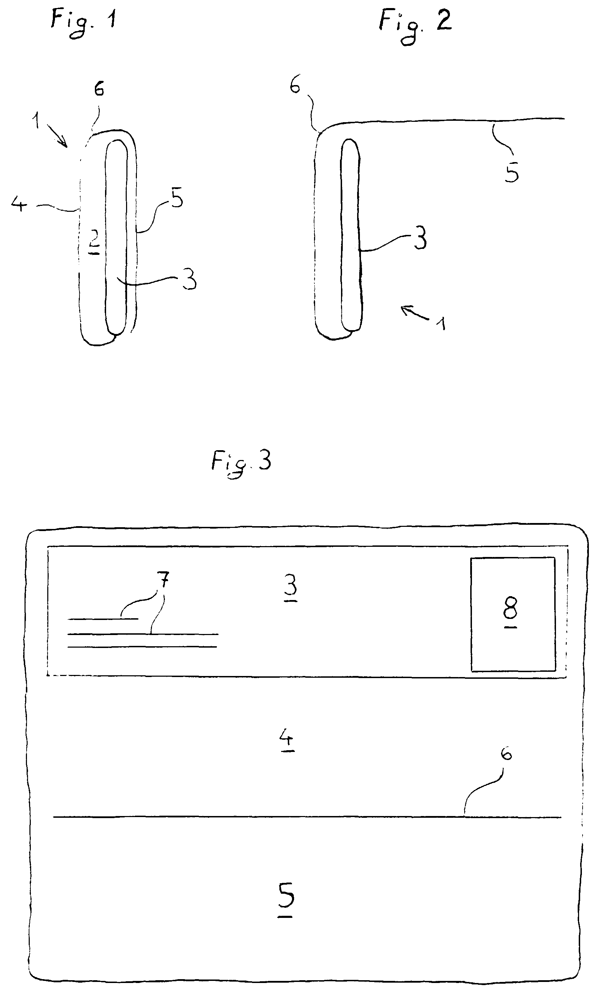

La figure 1 montre l'emballage 1 fermé, la figure 2 l'emballage partiellement ouvert. La figure 3 montre l'emballage 1 complètement déplié.

Des indications 7 et une photographie 8 sont disposées sous un cache en plastique transparent fixé par exemple sur le dispositif 3, tel que représenté, ou encore l'une des faces 4, 5.

Ce cache permet l'échange des indications 7 et de la photographie 8 par un personnel autorisé.

Des bandes à arrachage réversible, connues en soi, sont constituées d'une partie "boucles" dite femelle et d'une partie "crocs" dite mâle, les crocs venant s'accrocher dans les boucles de la partie femelle lorsque les deux parties sont en contact l'une avec l'autre.

De telles bandes sont disposées sur le pourtour du dispositif 3, des deux côtés de celui-ci, ainsi que de manière complémentaire sur un des côtés des faces 4 et 5.

Les ceintures de sécurité ont en général une capacité d'adhérence à la partie mâle d'une bande à arrachage réversible. Ceci permet au porteur de la ceinture de disposer l'emballage de la façon la plus confortable possible, avec une manipulation minimale.

Il est bien entendu que l'invention n'est pas limitée à l'exemple décrit.

## Revendications

1. Emballage (1) pour des marchandises telles que montres, stylos, briquets ou autres objets de dimensions réduites, pourvu d'au moins un dispositif (3) de rembourrage, caractérisé en ce que cet emballage (1) est réutilisable, une fois ouvert, comme complément (1) à une ceinture de sécurité pour véhicules.

2. Emballage (1) selon la revendication 1, caractérisé en ce que ce complément (1) a à la fois une fonction de confort en temps normal et une fonction d'identification en cas d'accident du véhicule.

3. Emballage (1) selon la revendication 2, caractérisé en ce que la fonction d'identification est assurée par l'incorporation de données (7) relatives au porteur de la ceinture, en particulier d'une photographie (8).

4. Emballage (1) selon les revendications 1 à 3, caractérisé en ce que l'emballage (1) se fixe à la ceinture à l'aide de bandes à arrachage réversible.

5. Emballage (1) selon la revendication 4, caractérisé en ce que son ouverture se fait par rotation d'une ou plusieurs faces (4, 5).

6. Emballage (1) selon revendication 5, caractérisé en ce que les bandes à arrachage réversible servent à maintenir les marchandises dans un emplacement (2).

7. Emballage (1) selon les revendications 1 à 6, caractérisé en ce qu'il comprend des inscriptions publicitaires.

8. Dispositif de capitonnage (1, 3) pour ceinture de sécurité de véhicule, caractérisé en ce qu'il peut également contenir une marchandise telle que montre, stylo, briquet ou autres objets de dimensions réduites, en vue du transport de cette marchandise.
